Europäisches Patentamt

European Patent Office

Office européen des brevets

(11) Veröffentlichungsnummer: **0 336 140**
**A1**

## (12) EUROPÄISCHE PATENTANMELDUNG

(21) Anmeldenummer: **89104415.8**

(22) Anmeldetag: **13.03.89**

(51) Int. Cl.⁴: **F16B 39/04**

(30) Priorität: **16.03.88 CH 986/88**

(43) Veröffentlichungstag der Anmeldung:
**11.10.89 Patentblatt 89/41**

(84) Benannte Vertragsstaaten:
**AT BE CH DE FR GB IT LI LU NL SE**

(71) Anmelder: **Gewinde Ziegler AG**
**Subingenstrasse 149**
**CH-4511 Horriwil(CH)**

(72) Erfinder: **Ziegler, Urs**
**Bergackerstrasse 141**
**CH-4511 Horriwil(CH)**

(74) Vertreter: **Gasser, François W.**
**Laupenstrasse 8 Postfach**
**CH-3001 Bern(CH)**

(54) **Gewinderung für die Fixierung der Lagerung an Maschinenspindeln.**

(57) Um einfach und wirkungsvoll eine hohe Planlauf-genauigkeit des Gewinderinges (1) und der mit ihm zusammenwirkenden Lagereinheit zu erreichen, weist der erfindungsgemässe Gewindering (1) zwei im 60°-Winkel angeordnete Blockierbolzen (5, 6) auf, die wie üblich durch Madenschrauben (3, 4) festklemmbar sind. Die Entstehung einer Achse, um die herum sich der Gewindering (1) verkanten kann, wird dadurch vermieden. Zudem wird ein wesentlich erhöhtes Losbrechmoment des Gewinderinges (1) erreicht.

Fig. 1

EP 0 336 140 A1

## GEWINDERING FUER DIE FIXIERUNG DER LAGERUNG AN MASCHINENSPINDELN

Die vorliegende Erfindung betrifft einen Gewindering für die Fixierung der Lagerung an Maschinenspindeln gemäss dem Oberbegriff des Patentanspruches 1.

Derartige Gewinderinge, auch unter dem Begriff Spannmuttern bekannt, werden im Maschinenbau seit langem verwendet, insbesondere für das Befestigen von Lagern an Maschinenspindeln mittels Wälzlagern. Herkömmlicherweise weisen derartige Gewinderinge zwei einander diametral gegenüberliegende Blockierbolzen auf, was unter gewissen Umständen dazu führen kann, dass die mit den Gewinderingen auf der zu lagernden Welle oder Spindel zu positionierenden Lagereinheiten verkantet werden, derart, dass die Welle oder Spindel radial verbogen oder zumindest entsprechenden Belastungen unterworfen wird. Selbst ein hochpräzises Schleifen von Gewinde und Planfläche der Gewinderinge in einer gemeinsamen Aufspannung kann diesen Nachteil nicht mit Sicherheit eliminieren.

Der vorliegenden Erfindung liegt die Aufgabe zugrunde, einen Gewindering zu schaffen, der diesen Nachteil eliminiert und eine verbiegungsfreie Lagerung von Wellen und Spindeln mit einfachen Mitteln ermöglicht.

Erfindungsgemäss wird diese Aufgabe durch einen Gewindering gelöst, wie er im Patentanspruch 1 definiert ist.

Eine vorteilhafte Ausgestaltung eines solchen Gewinderinges ist nachfolgend anhand der Zeichnung beschrieben. In letzterer zeigt

Fig. 1 einen erfindungsgemässen Gewindering in frontaler Ansicht und

Fig. 2 denselben Gewindering im Schnitt entlang der Linie B-B in Fig. 1.

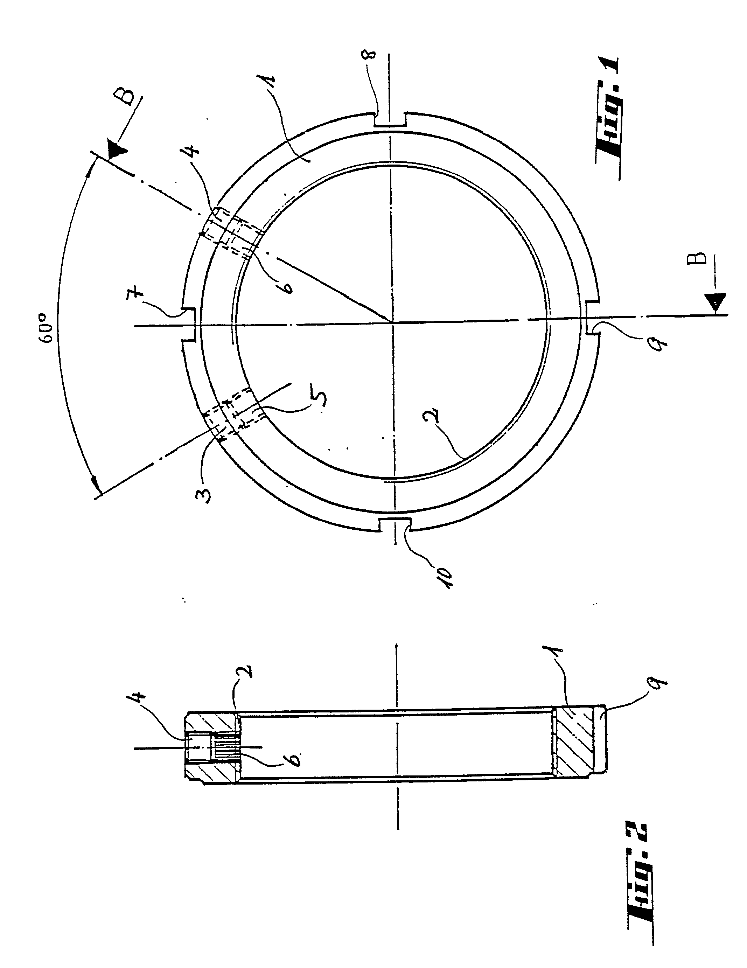

Aus den Fig. 1 und 2 erkennt der Fachmann, dass der erfindungsgemässe Gewindering 1, wie bei solchen Ringen üblich, ein Innengewinde 2, zwei Madenschrauchen 3 und 4, die auf radiale Blockierbolzen 5 und 6 wirken, sowie mehrere, hier vier, Spannuten 7, 8, 9 und 10 aufweist. Gegenüber allen bekannten Gewinderingen unterscheiden sich die erfindungsgemässen dadurch, dass die Blokkierbolzen 5 und 6 mit ihren zugeordneten Madenschrauben 3 und 4 als Spannmittel nicht diametral gegenüber einander angeordnet sind, sondern in einem Winkel von vorzugsweise 60°.

Dadurch wird verhindert, dass sich zwischen den Blockierbolzen 5 und 6 eine Drehachse ergibt, um die herum sich der Gewindering 1 verdrehen und damit verkanten kann. Eine hohe Planlaufgenauigkeit bezogen auf das Innengewinde 2 kann damit einfach und wirkungsvoll sichergestellt werden. Die der vorliegenden Erfindung zugrunde liegende Aufgabe wird demnach auf einfachste Art und Weise und ohne Mehraufwand bei der Herstellung der Gewinderinge realisiert.

Selbstverständlich ist die Erfindung auch bei Gewinderingen einsetzbar, bei denen die Madenschrauben nicht radial, sondern von der Seite her auf die Blockierbolzen einwirken.

Die erfindungsgemässen Gewinderinge weisen gegenüber den bekannten Spannringen neben dem vorerwähnten Vorteil einer hohen Planlaufgenauigkeit auch den Vorteil auf, dass das Losbrechmoment des Gewinderinges gegenüber den herkömmlichen Spannringen wesentlich erhöht ist.

## Ansprüche

Gewindering (1) mit Innengewinde (2) und zwei Blockierbolzen (5, 6) mit zugeordneten Madenschrauben (3, 4) als Spannmittel, dadurch gekennzeichnet, dass die Blockierbolzen (5, 6) und die diesen zugeordneten Madenschrauben (3, 4) bezogen auf die Mittelachse des Gewinderinges (1) in einem Winkel von ungefähr 60° angeordnet sind.

**Fig. 1**

**Fig. 2**

| | Europäisches Patentamt | EUROPÄISCHER RECHERCHENBERICHT | Nummer der Anmeldung |

EP 89 10 4415

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 436 468 (OZAKI et al.) * Spalte 5, Zeilen 18-34; Figuren 1,2 * | 1 | F 16 B 39/04 |
| A | EP-A-0 143 191 (SKF NOVA AB) * Figuren; Zusammenfassung * | 1 | |
| A | DE-C- 422 827 (ROENNFELDT) * das gesamte Dokument * | 1 | |

RECHERCHIERTE SACHGEBIETE (Int. Cl.4)

F 16 B 39/00
F 16 B 41/00

Der vorliegende Recherchenbericht wurde für alle Patentansprüche erstellt

| Recherchenort | Abschlußdatum der Recherche | Prüfer |
|---|---|---|
| BERLIN | 12-06-1989 | SCHAEFFLER C.A.A. |